# EUROPÄISCHE PATENTANMELDUNG

(11) **EP 4 650 259 A1**
(43) Veröffentlichungstag der Anmeldung: **19.11.2025**
(21) Anmeldenummer: 25175941.1
(22) Anmeldetag: 13.05.2025
(51) Int. Cl.: B62J 7/04, B62J 7/08, B62J 11/05

(54) **GEPÄCKTRÄGER FÜR EIN FAHRRAD SOWIE FAHRRAD MIT EINEM SOLCHEN GEPÄCKTRÄGER**

(30) Priorität: 14.05.2024 DE 202024102461 U
(71) Anmelder: Ensminger, Daniel, 23683 Scharbeutz (DE)
(72) Erfinder: Ensminger, Daniel, 23683 Scharbeutz (DE)
(74) Vertreter: Meissner Bolte Partnerschaft mbB

(57) **Zusammenfassung**

Die Erfindung betrifft einen Gepäckträger (1) für ein Fahrrad, wobei der Gepäckträger (1) eine Tragstruktur (2), welche insbesondere lös- oder austauschbar mit einem Rahmen des Fahrrads oder mit einer integrierten Gepäckträgerstruktur des Fahrrads verbunden oder verbindbar ist, und mindestens eine an einer Seite der Tragstruktur (2) angeordnete Halteeinrichtung (3) aufweist, welche ausgebildet ist, zumindest teil- oder bereichsweise ein längliches Gepäckstück, insbesondere in Gestalt eines Skis, eines Ski-Sets, eines Snowboards oder in Gestalt von Ski- oder Wanderstöcken, aufzunehmen und zu halten.

## Beschreibung

Die vorliegende Erfindung betrifft einen Gepäckträger für ein Fahrrad, welcher insbesondere ausgestaltet ist, längliche Gepäckstücke, wie beispielsweise Skier und/oder ein Snowboard und/oder Ski- oder Wanderstöcke zu transportieren.

Der Transport von Skiern oder Snowboards oder von Ski-, Wander- oder Walkingstöcke mittels eines Fahrrads stellte bisher eine gewisse Gefahrenquelle dar. Häufig wurden derartige Gepäckstücke vom Radfahrer beim Fahren auf der Lenkstange, also quer zur Fahrtrichtung, mit den Händen festgehalten. Sowohl Passanten rechts und links als auch der Radfahrer selbst waren dadurch gefährdet.

Ein anderer Ansatz besteht darin, diese länglichen Gepäckstücke längs des Fahrrads anzubringen. Aber auch dieser Transport beispielsweise von Skiern ergibt Nachteile, wie Behinderung beim Treten und beim Lenken des Fahrrads.

Demnach liegt der vorliegenden Erfindung die Problemstellung zu Grunde, dass längliche Gepäckstücke, insbesondere Skier, Snowboards oder Ski- bzw. Wanderstöcke bislang nicht gefahrlos mit einem Fahrrad transportiert werden konnten.

Auf Grundlage dieser Problemstellung liegt somit der Erfindung die Aufgabe zu Grunde, eine Möglichkeit anzugeben, mit welcher derartige längliche Gepäckstücke relativ gefahrlos mit Hilfe eines Fahrrads transportiert werden können, wobei es auch möglich sein sollte, in einer möglichst leicht durchzuführenden Weise ein herkömmliches Fahrrad für den Transport solcher länglichen Gepäckstücke umzurüsten.

Diese Aufgabe wird insbesondere durch den Gegenstand des unabhängigen Patentanspruchs 1 gelöst.

Demgemäß betrifft die Erfindung insbesondere einen Gepäckträger für ein Fahrrad, wobei der Gepäckträger eine Tragstruktur aufweist, welche insbesondere lös- oder austauschbar mit einem Rahmen des Fahrrads oder mit einer integrierten Gepäckträgerstruktur des Fahrrads verbunden oder verbindbar ist. Der erfindungsgemäße Gepäckträger umfasst ferner mindestens eine an einer Seite der Tragstruktur angeordnete Halteeinrichtung, welche ausgebildet ist, zumindest teil- oder bereichsweise ein längliches Gepäckstück, insbesondere in Gestalt eines Skis, eines Ski-Sets, eines Snowboards oder in Gestalt von Ski- oder Wanderstöcken, aufzunehmen und zu halten.

Der erfindungsgemäße Gepäckträger zeichnet sich somit dadurch aus, dass das zu transportierende längliche Gepäckstück seitlich des Hinterrads des Fahrrads in einer vertikalen Ausrichtung oder in einer quer-vertikalen Ausrichtung transportiert wird.

Gemäß bevorzugten Realisierungen des erfindungsgemäßen Gepäckträgers weist die Tragstruktur zwei parallel zueinander verlaufende horizontale Tragstreben auf, welche sich im montierten Zustand des Gepäckträgers an dem Fahrrad in Fahrtrichtung des Fahrrads erstrecken.

In diesem Zusammenhang ist insbesondere vorgesehen, dass die mindestens eine Halteeinrichtung des Gepäckträgers an einer der beiden horizontalen Tragstreben insbesondere lös- oder austauschbar befestigt ist.

Bei Weiterbildungen der zuletzt genannten Ausführungsvariante des erfindungsgemäßen Gepäckträgers ist vorgesehen, dass der Gepäckträger mindestens eine Halteeinrichtung einer ersten Gruppe von Halteeinrichtungen und mindestens eine Halteeinrichtung einer zweiten Gruppe von Halteeinrichtungen aufweist. In diesem Zusammenhang bietet es sich an, dass die mindestens eine Halteeinrichtung der ersten Gruppe von Halteeinrichtungen an einer ersten Tragstrebe der beiden Tragstreben und die mindestens eine Halteeinrichtung der zweiten Gruppe von Halteeinrichtungen an einer zweiten Tragstrebe der beiden Tragstreben insbesondere lös- oder austauschbar befestigt ist.

Mit anderen Worten, bei dieser Ausführungsvariante des erfindungsgemäßen Gepäckträgers ist vorgesehen, dass beidseitig des Hinterrads des Fahrrads jeweils mindestens eine Halteeinrichtung angeordnet ist, in welche jeweils mindestens ein längliches Gepäckstück aufnehmbar ist.

Beim Beispiel von einem Ski-Set ist es somit möglich, einen ersten Ski des Ski-Sets an einer Seite des Hinterrads und den zweiten Ski des Ski -Sets an der zweiten Seite des Hinterrads zu transportieren. Dadurch ist eine möglichst optimale Balancierung des Gewichts des Gepäckträgers mit den von dem Gepäckträger aufgenommenen Gepäckstücken möglich.

Der erfindungsgemäße Gepäckträger zeichnet sich insbesondere dadurch aus, dass die mindestens eine Halteeinrichtung des Gepäckträgers als austausch- oder auswechselbares Modul ausgeführt ist.

Diese Maßnahme erhöht den Anwendungsbereich des Gepäckträgers. So ist ein und der gleiche Gepäckträger durch Umrüsten der entsprechenden Halteeinrichtung geeignet, zum einen Skier zu transportieren, und zum anderen beispielsweise ein Snowboard oder dergleichen zu transportieren.

In einer besonders leicht zu realisierenden aber dennoch effektiven Weise ist gemäß einer Ausführungsvariante des erfindungsgemäßen Gepäckträgers vorgesehen, dass die mindestens eine Halteeinrichtung mindestens einen schachtförmigen Aufnahmebereich aufweist, von welchem das zu transportierende längliche Gepäckstück zumindest teil- oder bereichsweise aufnehmbar ist. Insbesondere ist es somit denkbar, dass das längliche Gepäckstück zumindest teilweise durch den schachtförmigen Aufnahmebereich der Halteeinrichtung gesteckt wird. Dadurch ist es möglich, den Schwerpunkt des Gepäckträgers möglichst tief zu verlagern, was eine erhöhte Stabilität beim Fahrradfahren liefert.

In diesem Zusammenhang bietet es sich insbesondere an, dass die mindestens eine Halteeinrichtung Fixiermittel aufweist zum lösbaren Fixieren des in dem mindestens einen schachtförmigen Aufnahmebereich zumindest teil- oder bereichsweise aufgenommenen länglichen Gepäckstücks. Bei dem insbesondere manuell manipulierbaren Fixiermittel handeln, wie beispielsweise eine Feststellschraube. Selbstverständlich kommen aber auch andere Ausführungsvarianten für das Fixiermittel in Frage.

Gemäß Ausführungsvarianten des erfindungsgemäßen Gepäckträgers, bei denen der modulare Aufbau im Vordergrund steht, ist vorgesehen, dass der Gepäckträger eine Schnittstelleneinrichtung aufweist, über welche die mindestens eine Halteeinrichtung mit der entsprechenden Tragstrebe der beiden parallel zueinander verlaufenden horizontalen Tragstreben der Tragstruktur verbindbar ist.

Gemäß Realisierungen dieser Ausführungsvariante ist vorgesehen, dass die Schnittstelleneinrichtung ausgebildet ist, vorzugsweise über eine rein formschlüssige Verbindung die mindestens eine Halteeinrichtung mit der entsprechenden Tragstrebe zu verbinden.

Insbesondere bietet es sich in diesem Zusammenhang an, dass die Schnittstelleneinrichtung derart ausgebildet ist, dass die mindestens eine Halteeinrichtung über eine Steckverbindung mit der entsprechenden Haltestrebe verbindbar ist.

Gemäß Realisierungen der zuletzt genannten Ausführungsvarianten des erfindungsgemäßen Gepäckträgers, bei welchen der Gepäckträger eine Schnittstelleneinrichtung aufweist, ist vorgesehen, dass die Schnittstelleneinrichtung eine mit der entsprechenden Haltestrebe der Tragstruktur verbundene, insbesondere lösbar verbundene, Halteplatte aufweist, welche Teil der Schnittstelleneinrichtung ist, und über welche die mindestens eine Halteeinrichtung mit der Haltestrebe verbunden oder verbindbar ist.

Hierbei bietet es sich an, dass die Halteplatte ein Nut-Feder-System aufweist, wobei andererseits auch die mindestens eine Halteeinrichtung ein Nut-Feder-System aufweist, welches zu dem Nut-Feder-System der Halteplatte zumindest teil- oder bereichsweise komplementär ausgeführt ist.

Um zu ermöglichen, dass der erfindungsgemäße Gepäckträger möglichst einfach mit dem Fahrrad oder einer integrierten Gepäckträgerstruktur des Fahrrads verbindbar ist, ist gemäß Realisierungen des erfindungsgemäßen Gepäckträgers vorgesehen, dass die Tragstruktur eine insbesondere hakenförmige Vorrichtung zum formschlüssigen Verbinden, insbesondere zum Einhaken des Gepäckträgers an einer Querstrebe des Fahrrads oder an einer Querstrebe der internen Gepäckträgerstruktur des Fahrrads aufweist.

Durch diese insbesondere hakenförmige Vorrichtung ist der Gepäckträger bereits mit dem Fahrrad bzw. mit dem Fahrradrahmen vormontierbar und insbesondere im Hinblick auf den Fahrradrahmen richtig positionierbar.

Gemäß bevorzugten Realisierungen des erfindungsgemäßen Gepäckträgers umfasst die Tragstruktur vorzugsweise zwei hintere Streben, die über einen Endbereich jeweils mit der Tragstruktur verbunden und über einen gegenüberliegenden Endbereich jeweils vorzugsweise über einen Schnellspanner mit der Hinterradgabel im Bereich der Hinterradnabe des Fahrrads lösbar verbunden oder verbindbar sind.

Die Erfindung betrifft ferner ein Fahrrad mit einem Gepäckträger der zuvor genannten erfindungsgemäßen Art, wobei der Gepäckträger insbesondere lös- oder austauschbar mit dem Rahmen des Fahrrads oder mit einer integrierten Gepäckträgerstruktur des Fahrrads verbunden ist.

Nachfolgend wird die Erfindung unter Bezugnahme auf die beiliegenden Zeichnungen näher beschrieben.

### Es zeigen:

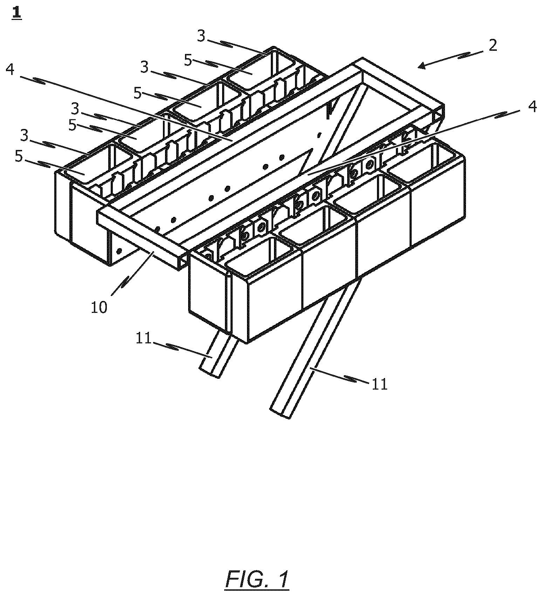

- FIG. 1: schematisch und in einer ersten isometrischen Explosionsansicht eine erste exemplarische Ausführungsform des erfindungsgemäßen Gepäckträgers;

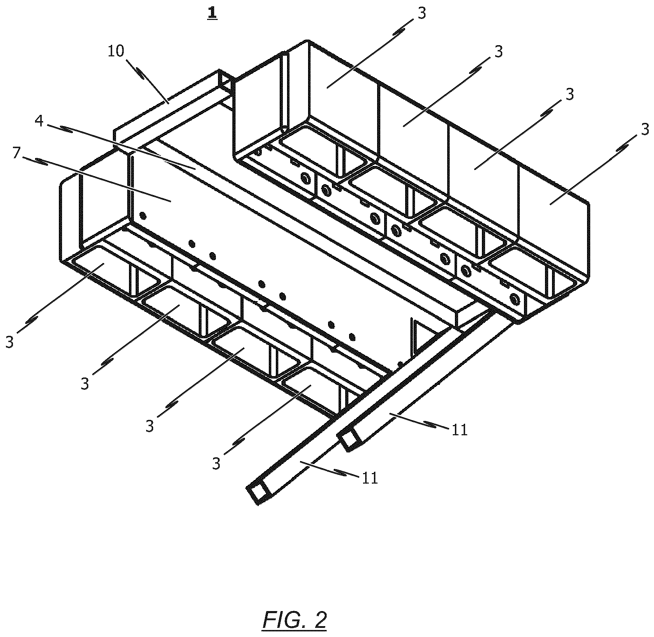

- FIG. 2: schematisch und in einer zweiten isometrischen Explosionsansicht die erste exemplarische Ausführungsform des erfindungsgemäßen Gepäckträgers gemäß FIG. 1;

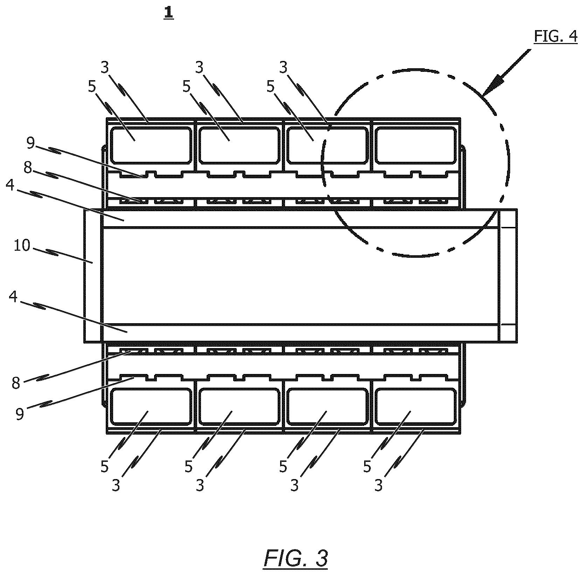

- FIG. 3: schematisch und in einer Explosionsansicht von oben die erste exemplarische Ausführungsform des erfindungsgemäßen Gepäckträgers gemäß FIG. 1;

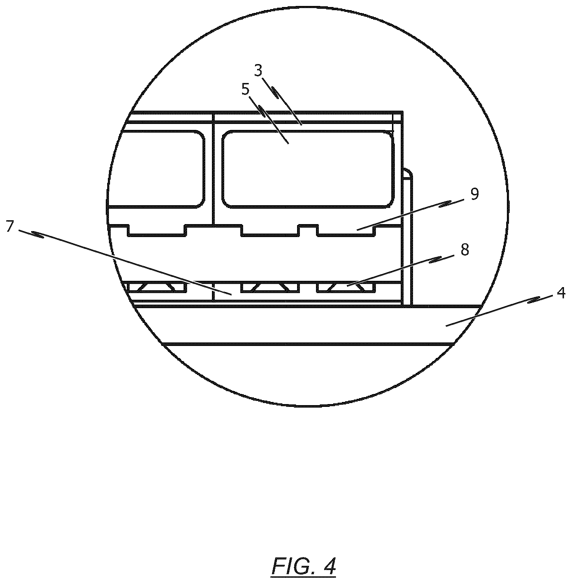

- FIG. 4: schematisch eine Detailansicht der FIG. 3;
- FIG. 5A: schematisch und in einer isometrischen Ansicht eine erste exemplarische Ausführungsform einer Halteeinrichtung des Gepäckträgers gemäß FIG. 1;
- FIG. 5B: schematisch und in einer isometrischen Ansicht eine zweite exemplarische Ausführungsform der Halteeinrichtung des Gepäckträgers gemäß FIG. 1;

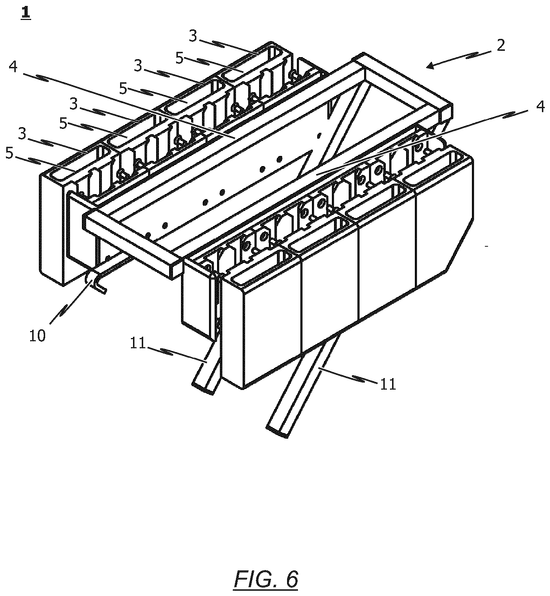

- FIG. 6: schematisch und in einer isometrischen Explosionsansicht eine zweite exemplarische Ausführungsform des erfindungsgemäßen Gepäckträgers;

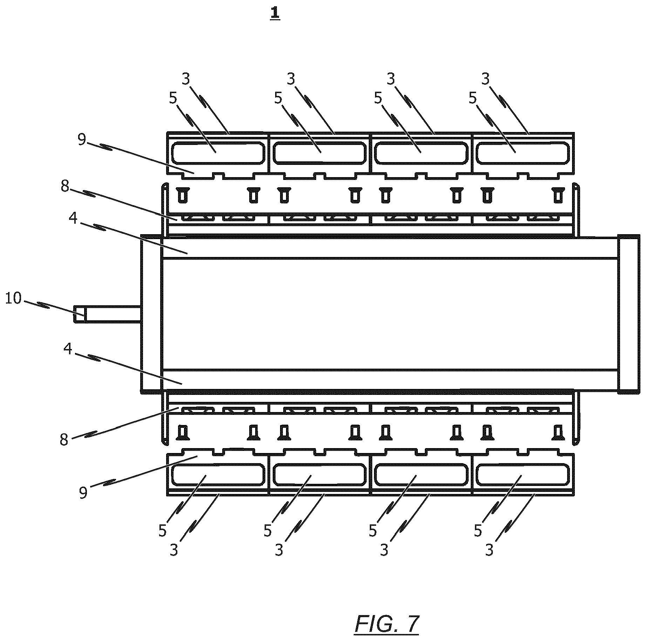

- FIG. 7: schematisch und in einer Explosionsansicht von oben die zweite exemplarische Ausführungsform des erfindungsgemäßen Gepäckträgers;

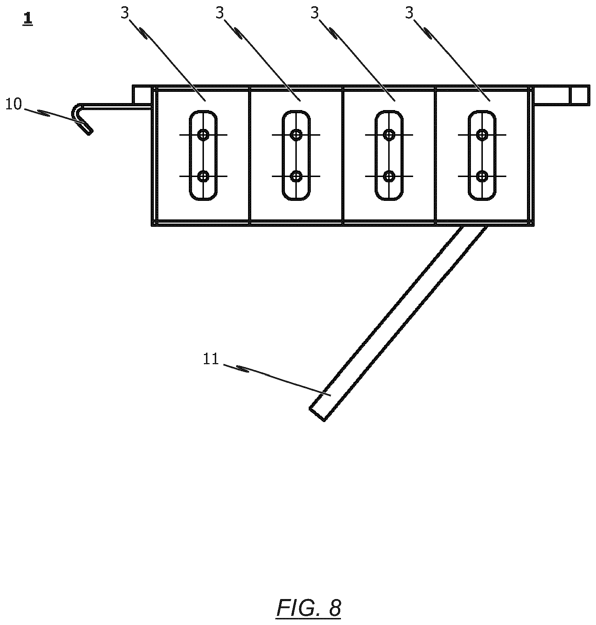

- FIG. 8: schematisch und in einer Seitenansicht eine dritte exemplarische Ausführungsform des erfindungsgemäßen Gepäckträgers;
- FIG. 9: schematisch und in einer ersten isometrischen Ansicht die dritte exemplarische Ausführungsform des erfindungsgemäßen Gepäckträgers;
- FIG. 10: schematisch und in einer zweiten isometrischen Ansicht die dritte exemplarischen Ausführungsform des erfindungsgemäßen Gepäckträgers;

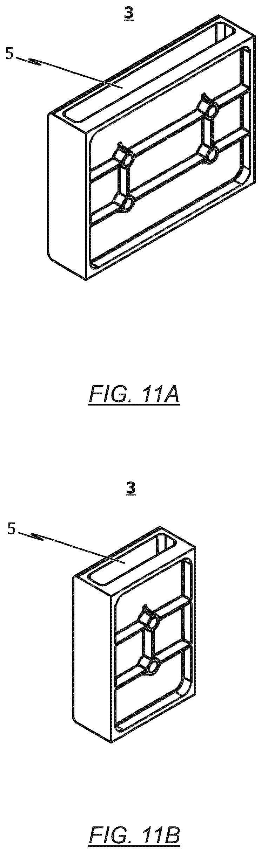

- FIG. 11A: schematisch und in einer isometrischen Ansicht eine weitere exemplarische Ausführungsform einer Halteeinrichtung für den erfindungsgemäßen Gepäckträger; und
- FIG. 11B: schematisch und in einer isometrischen Ansicht eine weitere Ausführungsform einer Halteeinrichtung des erfindungsgemäßen Gepäckträgers.

Die in den Zeichnungen gezeigten Ausführungsvarianten des erfindungsgemäßen Gepäckträgers 1 zeichnen sich dadurch aus, dass diese nach einem Baustein- oder Baukastenprinzip aufgebaut sind, wobei die funktionellen Komponenten des Gepäckträgers 1 in Module oder Baugruppen aufgeteilt sind. Die einzelnen Module bzw. Baugruppen des nach dem Baukastenprinzip aufgebauten Gepäckträgers 1 können je nach gewünschter Anwendung zusammengefügt werden oder über entsprechende Schnittstellen integriert werden.

Der nach dem Baukastenprinzip aufgebaute Gepäckträger 1 und der durch seinen modulartigen Aufbau gekennzeichnete (erfindungsgemäße) Gepäckträger 1 ermöglicht es, dass individuell konfigurierbare Gepäckträger 1 erstellt werden können, ohne dabei auf baureihenübergreifende Skaleneffekte verzichten zu müssen. Die einzelnen Module des Gepäckträgers 1 sind insbesondere standardisierte Bausteine, welche durch individuelle Anpasselemente flexibel über den Baukasten realisiert werden.

Der Vorteil eines solchen nach dem Baukastenprinzip aufgebauten modulartigen Gepäckträgers 1 ist insbesondere an der erhöhten Anpassungsfähigkeit zu sehen, da verschiedene kompatible Module des Gepäckträgers 1, insbesondere die modulartig aufgebauten Halteeinrichtungen 3, an der Tragstruktur 2 angebracht, entfernt, gewechselt oder anders gruppiert werden können, um letztendlich einen Gepäckträger 1 an neue Bedingungen anzupassen.

Andererseits liefert der modulartige Aufbau des Gepäckträgers 1 den weiteren Vorteil, dass in einer einfach zu realisierenden Weise eine große Produktvarietät realisierbar ist. Abgesehen hiervon ist eine kostengünstigere Herstellung aufgrund baugleicher Serien und einfacherer Montageprozesse umsetzbar.

Wie in den Zeichnungen dargestellt, weist der Gepäckträger 1 gemäß den gezeigten exemplarischen Ausführungsformen jeweils eine modulartige Tragstruktur 2 sowie modulartig aufgebaute Halteeinrichtungen 3 auf. Die Tragstruktur 2 ist lös- oder austauschbar mit einem in den Zeichnungen nicht gezeigten Rahmen des Fahrrads oder alternativ hierzu mit einer integrierten Gepäckträgerstruktur des Fahrrads verbindbar.

Die einzelnen modulartig aufgebauten Halteeinrichtungen 3 sind jeweils an einer Seite der Tragstruktur 2 auswechselbar angeordnet.

Jede Halteeinrichtung 3 ist dazu ausgebildet, zumindest teil- oder bereichsweise ein längliches Gepäckstück im vertikal aufrecht gestellten Zustand oder in einem quer zur Vertikalrichtung ausgerichteten Zustand aufzunehmen und zu halten. Bei dem länglichen Gepäckstück handelt es sich insbesondere um einen Ski, um ein Ski-Set, um ein Snowboard oder um andere Gepäckstücke, wie beispielsweise Ski- oder Wanderstöcke.

Die Tragstruktur 2 des Gepäckträgers 1 weist zwei parallel zueinander verlaufende horizontale Tragstreben 4 auf. Im montierten Zustand des Gepäckträgers 1 an einem Fahrrad erstrecken sich die beiden Tragstreben 4 in Fahrtrichtung des Fahrrads. An den jeweiligen Tragstreben 4 sind die Halteeinrichtungen 3 des Gepäckträgers 1 lös- oder austauschbar befestigt.

Wie bereits ausgeführt, sind die Halteeinrichtungen 3 des erfindungsgemäßen Gepäckträgers 1 jeweils als austausch- oder auswechselbares Modul ausgeführt. Jede Halteeinrichtung 3 weist einen schachtförmigen Aufnahmebereich 5 auf, von welchem das zu transportierende längliche Gepäckstück zumindest teil- oder bereichsweise aufnehmbar ist.

Die Halteeinrichtungen 3 können Fixiermittel aufweisen, um das in dem schachtförmigen Aufnahmebereich 5 zumindest teil- oder bereichsweise aufgenommene längliche Gepäckstück lösbar zu fixieren. Hierbei bietet es sich insbesondere an, dass als Fixiermittel manuell manipulierbare Feststellschrauben zum Einsatz kommen.

Der Gepäckträger 1 und insbesondere die Tragstruktur 2 des Gepäckträgers 1 weist eine Schnittstelleneinrichtung auf, über welche die entsprechenden Halteeinrichtungen 3 mit der entsprechenden Tragstrebe 4 des Gepäckträgers 1 verbindbar sind.

Im Einzelnen ist die Schnittstelleneinrichtung ausgebildet, über eine formschlüssige Verbindung die Halteeinrichtungen 3 mit der entsprechenden Tragstrebe 4 zu verbinden. Die Schnittstelleneinrichtung ist derart ausgebildet, dass die Halteeinrichtungen 3 über eine Steckverbindung mit der entsprechenden Haltestrebe verbindbar sind.

Hierzu ist bei den in den Zeichnungen gezeigten Ausführungsformen des erfindungsgemäßen Gepäckträgers 1 vorgesehen, dass die Schnittstelleneinrichtung eine mit der entsprechenden Haltestrebe der Tragstruktur 2 des Gepäckträgers 1 insbesondere lösbar verbundene Halteplatte 7 aufweist, welche Teil der Schnittstelleneinrichtung ist, und über welche die Halteeinrichtungen 3 mit der Tragstrebe 4 verbindbar sind.

Hierzu weist die Halteplatte 7 ein Nut-Feder-System 8 auf. Andererseits sind die entsprechenden Halteeinrichtungen 3 ebenfalls mit einem Nut-Feder-System 9 versehen, welches zumindest teil- oder bereichsweise komplementär zu dem Nut-Feder-System 8 der Halteplatte 7 ausgeführt ist.

Die Tragstreben 4 der Tragstruktur 2 des Gepäckträgers 1 weisen einen vorderen und einen hinteren Wandbereich auf, welche zusammen den Bereich definieren, in welchem die entsprechenden Halteeinrichtungen 3 aufnehmbar sind.

Mit anderen Worten, die Seitenflächen definieren eine Art "Rahmen" für die Halteeinrichtungen 3.

Die einzelnen Nut-Feder-Bereiche des Nut-Feder-Systems 8 der Halteplatte 7 und die einzelnen Nut-Feder-Bereiche der Halteeinrichtungen 3 sind so konzipiert, dass mit dem Nut-Feder-System 8 der Halteplatte 7 ein oder mehrere Halteeinrichtungen 3 nebeneinander aufgenommen werden können.

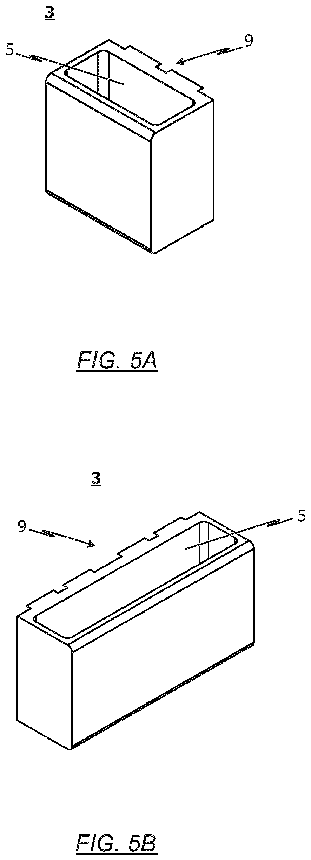

Dies macht es möglich, dass unterschiedliche Halteeinrichtungen 3, wie sie beispielsweise in FIG. 5A und FIG. 5B gezeigt sind, mit der Halteplatte 7 des Gepäckträgers 1 verbunden werden können.

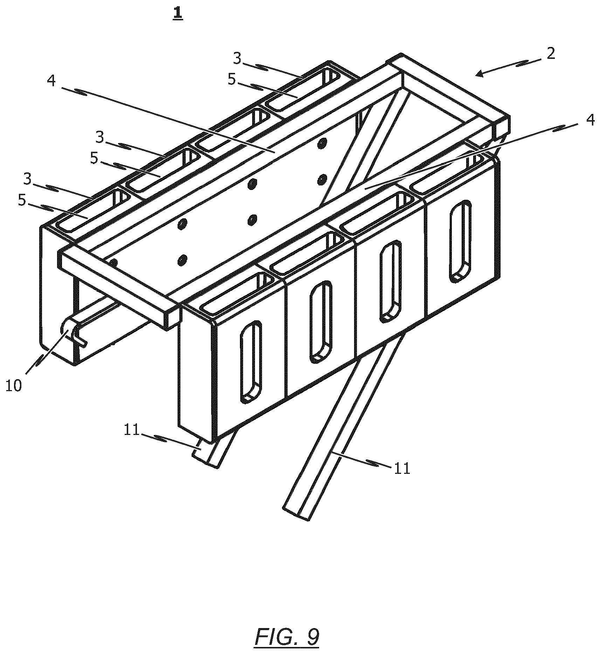

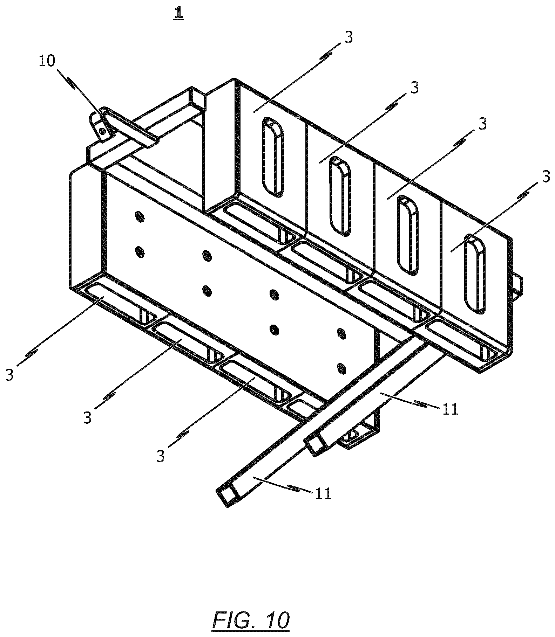

Der Darstellung beispielsweise in FIG. 9 oder in FIG. 10 ist zu entnehmen, dass die Tragstruktur 2 eine insbesondere hakenförmige Vorrichtung 10 zum Einhaken des Gepäckträgers 1 an einer Querstrebe des Fahrrads oder an einer Querstrebe einer internen Gepäckträgerstruktur des Fahrrads aufweist.

Ferner weist die Tragstruktur 2 zwei hintere Streben 11 auf, die über einen Endbereich mit der Tragstruktur 2 verbunden und über einen gegenüberliegenden Endbereich vorzugsweise über einen Schnellspanner mit der Hinterradgabel im Bereich der Hinterradnabe lösbar verbindbar sind.

Die Erfindung ist nicht auf die in den Zeichnungen gezeigten Ausführungsformen des erfindungsgemäßen Gepäckträgers 1 beschränkt, sondern ergibt sich aus einer Zusammenschau sämtlicher hierin offenbarter Merkmale.

### Bezugszeichenliste

- 1: Gepäckträger
- 2: Tragstruktur
- 3: Halteeinrichtung
- 4: Tragstrebe
- 5: schachtförmiger Aufnahmebereich
- 6: Schnittstelleneinrichtung
- 7: Halteplatte
- 8: Nut-Feder-System der Halteplatte
- 9: Nut-Feder-System der Halteeinrichtung
- 10: hakenförmige Vorrichtung
- 11: hintere Strebe

## Patentansprüche

1. Gepäckträger (1) für ein Fahrrad, wobei der Gepäckträger (1) Folgendes aufweist:
- eine Tragstruktur (2), welche insbesondere lös- oder austauschbar mit einem Rahmen des Fahrrads oder mit einer integrierten Gepäckträgerstruktur des Fahrrads verbunden oder verbindbar ist; und
- mindestens eine an einer Seite der Tragstruktur (2) angeordnete Halteeinrichtung (3), welche ausgebildet ist, zumindest teil- oder bereichsweise ein längliches Gepäckstück, insbesondere in Gestalt eines Skis, eines Ski-Sets, eines Snowboards oder in Gestalt von Ski- oder Wanderstöcken, aufzunehmen und zu halten.

2. Gepäckträger (1) nach Anspruch 1,
wobei die Tragstruktur (2) zwei parallel zueinander verlaufende horizontale Tragstreben (4) aufweist, welche sich im montierten Zustand des Gepäckträgers (1) an einem Fahrrad in Fahrtrichtung des Fahrrads erstrecken, wobei die mindestens eine Halteeinrichtung (3) an einer der zwei horizontalen Tragstreben (4) insbesondere lös- oder austauschbar befestigt ist.

3. Gepäckträger (1) nach Anspruch 2,
wobei der Gepäckträger (1) mindestens eine Halteeinrichtung (3) einer ersten Gruppe von Halteeinrichtungen und mindestens eine Halteeinrichtung (3) einer zweiten Gruppe von Halteeinrichtungen aufweist, wobei die mindestens eine Halteeinrichtung (3) der ersten Gruppe von Halteeinrichtungen an einer ersten Tragstrebe der beiden Tragstreben (4) und die mindestens eine Halteeinrichtung (3) der zweiten Gruppe von Halteeinrichtungen an einer zweiten Tragstrebe der beiden Tragstreben (4) insbesondere lös- oder austauschbar befestigt ist.

4. Gepäckträger (1) nach einem der Ansprüche 1 bis 3,
wobei die mindestens eine Halteeinrichtung (3) als austausch- oder auswechselbares Modul ausgeführt ist.

5. Gepäckträger (1) nach einem der Ansprüche 1 bis 4,
wobei die mindestens eine Halteeinrichtung (3) mindestens einen schachtförmigen Aufnahmebereich (5) aufweist, von welchem das zu transportierende längliche Gepäckstück zumindest teil- oder bereichsweise aufnehmbar ist.

6. Gepäckträger (1) nach Anspruch 5,
wobei die mindestens eine Halteeinrichtung (3) Fixiermittel aufweist zum lösbaren Fixieren des in dem mindestens einen schachtförmigen Aufnahmebereich (5) zumindest teil- oder bereichsweise aufgenommenen länglichen Gepäckstücks.

7. Gepäckträger (1) nach Anspruch 6,
wobei das Fixiermittel manuell manipulierbar ist und insbesondere als Feststellschraube ausgeführt ist.

8. Gepäckträger (1) nach einem der Ansprüche 1 bis 7,
wobei der Gepäckträger (1) eine Schnittstelleneinrichtung aufweist, über welche die mindestens eine Halteeinrichtung (3) mit der entsprechenden Tragstrebe (4) verbindbar ist.

9. Gepäckträger (1) nach Anspruch 8,
wobei die Schnittstelleneinrichtung ausgebildet ist, vorzugsweise über eine rein formschlüssige Verbindung die mindestens eine Halteeinrichtung (3) mit der entsprechenden Tragstrebe (4) zu verbinden.

10. Gepäckträger (1) nach Anspruch 8 oder 9,
wobei die Schnittstelleneinrichtung derart ausgebildet ist, dass die mindestens eine Halteeinrichtung (3) über eine Steckverbindung mit der entsprechenden Tragstrebe (4) verbindbar ist.

11. Gepäckträger (1) nach einem der Ansprüche 8 bis 10,
wobei die Schnittstelleneinrichtung eine mit der entsprechenden Tragstrebe (4) verbundene, insbesondere lösbar verbundene, Halteplatte (7) aufweist, welche Teil der Schnittstelleneinrichtung ist, und über welche die mindestens eine Halteeinrichtung (3) mit der Tragstrebe (4) verbunden oder verbindbar ist.

12. Gepäckträger (1) nach Anspruch 11,
wobei die Halteplatte (7) ein Nut-Feder-System (8) aufweist, und wobei die mindestens eine Halteeinrichtung (3) ein zum Nut-Feder-System (8) der Halteplatte (7) komplementär ausgeführtes Nut-Feder-System (9) aufweist.

13. Gepäckträger (1) nach einem der Ansprüche 1 bis 12,
wobei die Tragstruktur (2) eine insbesondere hakenförmige Vorrichtung (10) zum formschlüssigen Verbinden, insbesondere zum Einhaken des Gepäckträgers (1) an einer Querstrebe des Fahrrads oder an einer Querstrebe der internen Gepäckträgerstruktur des Fahrrads aufweist.

14. Gepäckträger (1) nach einem der Ansprüche 1 bis 13,
wobei die Tragstruktur (2) zwei hintere Streben (11) aufweist, die über einen Endbereich mit der Tragstruktur (2) verbunden und über einen gegenüberliegenden Endbereich vorzugsweise über einen Schnellspanner mit der Hinterradgabel im Bereich der Hinterradnabe des Fahrrads lösbar verbunden oder verbindbar sind.

15. Fahrrad mit einem Gepäckträger (1) nach einem der Ansprüche 1 bis 14, wobei der Gepäckträger (1) lös- oder austauschbar mit einem Rahmen des Fahrrads oder mit einer integrierten Gepäckträgerstruktur des Fahrrads verbunden ist.
